Europäisches Patentamt

European Patent Office

Office européen des brevets

(19)

(11) Numéro de publication: **0 158 983**
**A2**

(12) **DEMANDE DE BREVET EUROPEEN**

(21) Numéro de dépôt: **85104438.8**

(22) Date de dépôt: **12.04.85**

(51) Int. Cl.⁴: **G 03 B 15/06**

(30) Priorité: **16.04.84 CH 1897/84**

(43) Date de publication de la demande:
**23.10.85 Bulletin 85/43**

(84) Etats contractants désignés:
**DE FR GB IT SE**

(71) Demandeur: **Baliozian, Mardick**
**Ontario Place 10 East Ontario Street**
**60611 Chicago(US)**

(72) Inventeur: **Baliozian, Mardick**
**Ontario Place 10 East Ontario Street**
**60611 Chicago(US)**

(74) Mandataire: **Rossel, Albert, Dipl.-Ing. ETH**
**Postfach**
**CH-8023 Zürich(CH)**

(54) **Dispositif réflecteur de lumière destiné à être utilisé notamment lors de prises de vues photographiques ou cinématographiques.**

(57) Dispositif réflecteur de lumière susceptible d'être transporté à la main et comportant au moins un panneau réflecteur et un support démontable.

Ce dispositif comprend deux volets réversibles (1 et 2) dont les deux faces sont aptes à réfléchir la lumière de façon différente, par exemple de manière diffuse sur une face alors que l'autre est à forte réflectance. Ces deux volets sont articulés de part et d'autre d'une lame rigide (3) susceptible d'être fixée sur le support amovible de ce dispositif, de façon à pouvoir être déployés, selon des angles différents d'ouverture dans un sens ou dans l'autre, ou à être repliés l'un contre l'autre pour le transport de l'ensemble. Les bords latéraux de ces volets sont pourvus d'organes de fixation aptes à immobiliser, dans des positions variables, des tiges amovibles (20, 21) ou similaires disposées de façon à relier les bords corrrespondants de ces deux volets pour les immobiliser selon l'angle d'ouverture voulu, ou pour les maintenir dans le prolongement l'un de l'autre dans un même plan afin de constituer un panneau de grande surface.

Le présent dispositif réflecteur peut être utilisé notamment pour des prises de vues photographiques ou cinématographiques, ou similaires.

fig: 3

"DISPOSITIF REFLECTEUR DE LUMIERE DESTINE A ETRE UTILISE NOTAMMENT LORS DE PRISES DE VUES PHOTOGRAPHIQUES OU CINEMATOGRAPHIQUES"

La présente invention concerne les dispositifs réflecteurs de lumière susceptibles d'être tranportés à la main pour être utilisés sur les lieux d'une prise de vue photographique ou cinématographique.

Pour une telle application il existe déjà deux types de réflecteurs portatifs,à savoir : d'une part ceux consistant en des panneaux rigides transportables à la main et ceux constitués par des surfaces souples, en tissu ou matière plastique, tendues sur des châssis métalliques démontables ou pliants.

Les dispositifs du premier type présentent des limitations d'emploi qui sont rédhibitoires dans de nombreux cas. En effet les panneaux réfléchissants constituant ceux-ci peuvent simplement être placés debout sur le sol ou être adossés contre une paroi ou un élément d'appui quelconque. Cependant il n'est pas possible de les orienter dans toute direction voulue avec une inclinaison variable. Par ailleurs les dispositifs réalisés à partir de panneaux réfléchissants sont en général peu pratiques à transporter en raison de leur encombrement et certains d'entre eux sont relativement fragiles. Ainsi les panneaux en polystyrène expansé sont très fragiles et non lavables. Il en est sensiblement de même pour les panneaux en carton ou matériau similaire.

Quant aux dispositifs du second type, c'est-à-dire ceux constitués par une surface souple réfléchissante montée sur un châssis métallique démontable, ils ont l'inconvénient d'être peu pratiques. En effet l'assemblage des éléments constitutifs du châssis métallique requiert un certain temps, de même que la mise en place ultérieure de la surface réfléchissante en tissu ou en matière plastique. De plus les possibilités d'application de ces dispositifs restent également limitées ,car leurs formes ne sont pas modifiables et leurs possibilités d'orientation sont réduites, compte tenu que dans la plupart des cas il est prévu de faire reposer le bord inférieur du châssis sur le sol, cependant que sa partie

0158983

supérieure s'adosse à un élément de soutien. De plus ces dispositifs sont relativement fragiles, les élément du châssis métallique pouvant être déformés au transport, cependant que les surfaces réfléchissantes, en tissu ou matière plastique, sont fréquemment déchirées lors des opérations de montage et de démontage.

C'est pourquoi la présente invention a pour but de réaliser un dispositif réflecteur destiné au même usage mais dont la conception est telle que celui-ci est librement orientable en tout sens et puissse donner lieu à diverses transformations en vue d'applications différentes, ce dispositif étant par ailleurs susceptible d'être transporté aisément à la main sans risque de détérioration.

A cet effet le présent dispositif est constitué par deux volets réversibles dont les deux faces sont aptes à réfléchir la lumière de façon différente, par exemple de manière diffuse sur une face alors que l'autre est à forte réflectance, et qui sont articulés de part et d'autre d'une lame rigide susceptible d'être fixée sur le support amovible de ce dispositif, de façon à pouvoir être déployés selon des angles différents d'ouverture, dans un sens ou dans l'autre, pour utiliser une de leur face ou l'autre, ou à être repliés l'un contre l'autre soit pour le transport de l'ensemble soit pour réduire les dimensions, et en ce que les bords latéraux de ces volets sont pourvus d'organes de fixation aptes à immobiliser, dans des positions variables, des tiges amovibles ou similaires disposées de façon à relier les bords correspondants de ces deux volets pour les immobiliser selon l'angle d'ouverture voulu, ou pour les maintenir dans le prolongement l'un de l'autre dans un même plan afin de constituer un panneau de grande surface.

Cependant ces mêmes tiges et organes de fixation permettant également la juxtaposition des volets de deux dispositifs selon l'invention et la variation de position angulaire de ceux-ci.

Dans une forme de réalisation avantageuse du présent dispositif, les deux volets de celui-ci sont constitués par un panneau d'un seul tenant en matière plastique relativement mince présentant deux rainures susceptibles de former des lignes d'articulation de part et d'autre d'une bande transversale sur laquelle est rapportée la lame rigide susceptible d'être fixée sur le support amovible de l'ensemble, les bords des deux volets ainsi réalisés portant des rebords de raidissement.

Selon une autre caractéristique de cette forme avantageuse de réalisation, les rebords raidissement des deux volets sont constitués par repliage des bords correspondants du panneau sous forme de barrettes creuses, une succession de lignes d'articulation étant prévues parallèlement à chacun de ces bords pour délimiter autant de bandes parallèles pliées à angle droit les unes par rapport aux autres et maintenues en place par des organes de jonction, tels que des rivets élastiques ou non.

Cependant d'autres particularités et avantages du présent dispositif apparaîtront au cours de la description suivante d'un exemple de réalisation de celui-ci. Cette description est donnée en référence au dessin annexé à titre indicatif, et sur lequel :

La figure 1 est une vue en perspective du présent dispositif après déploiement de celui-ci dans l'une de ses positions possibles d'utilisation ;

La figure 2 représente ce dispositif dans sa forme de transport, c'est-à-dire après repliement de ses deux volets l'un contre l'autre ;

La figure 3 est une vue en perspective du présent dispositif déployé dans une autre position d'utilisation ;

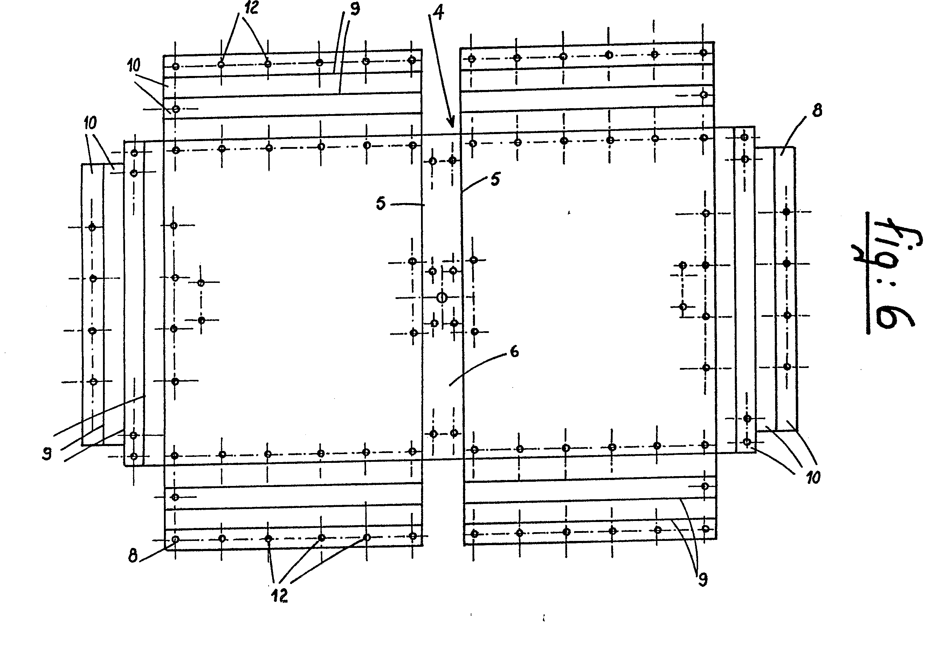

La figure 4 est une vue, à échelle différente, représentant le support utilisé pour fixer le présent dispositif sur un pied de soutien ;

La figure 5 est une vue en perspective du présent dispositif après repliement de ses deux volets l'un contre l'autre, mais en sens inverse par rapport au sens de pliage prévu à la figure 2 ;

La figure 6 est une vue en plan du panneau constituant les deux volets du présent dispositif ;

Les figures 7 et 8 sont des vues de détail, à échelle différente, respectivement suivant les lignes VII-VII et VIII-VIII de la figure 1 ;

4

La figure 9 représente plusieurs éléments accessoires pouvant être adaptés sur les volets du présent dispositif;

La figure 10 est une vue en plan de dessus représentant l'assemblage côte à côte de plusieurs dispositifs réflecteurs selon l'invention ;

La figure 11 est une vue partielle en perspective d'une variante de réalisation.

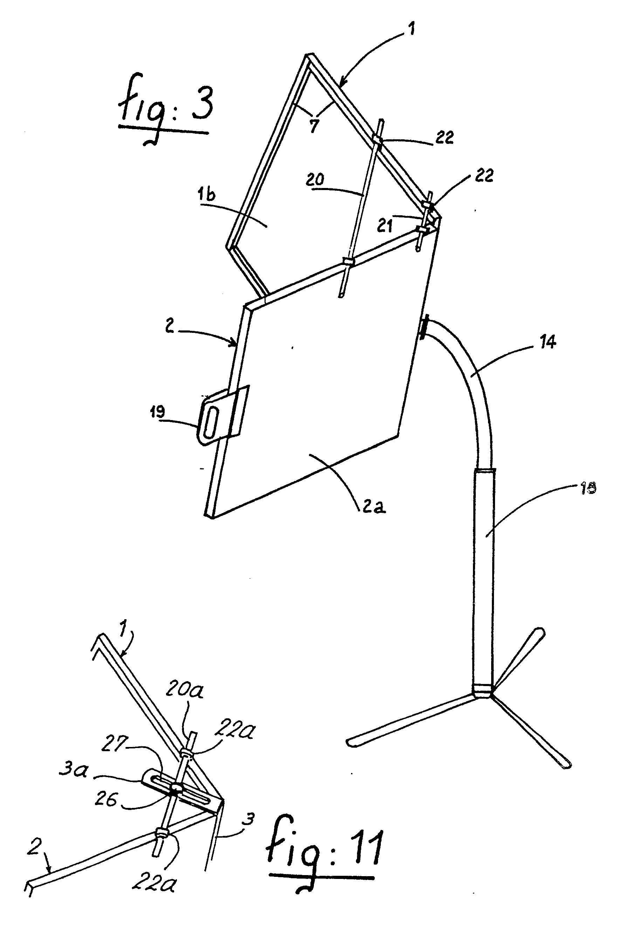

Comme déjà indiqué, le présent dispositif comporte deux volets 1 et 2 dont les deux faces sont aptes à réfléchir la lumière de façon différente. Ainsi les faces 1a et 2a, qui se trouvent placées à l'extérieur lors du pliage de l'ensemble dans sa position de transport (voir figure 3), sont de couleur blanche et sont en mesure de réfléchir la lumière de manière diffuse. Par contre les faces opposées 1b et 2b comportent un revêtement à forte réflectance. A cet effet ces deux faces peuvent être pourvues d'un revêtement métallique réfléchissant , de préférence par une surface grainée. Ces deux volets s'articulent de part et d'autre d'une lame rigide 3 qui s'étend selon l'axe transversal médian du panneau formé par ceux-ci après leur déploiement. Cette lame transversale est destinée à être fixée le cas échéant sur un support amovible permettant de maintenir le présent dispositif au-dessus du sol dans toute orientation voulue, comme illustré à la figure 3.

Dans l'exemple représenté, les deux volets 1 et 2 du présent dispositif sont constitués par un panneau 4 d'un seul tenant, en matière plastique relativement mince, présentant deux lignes 5 d'articulation de part et d'autre d'une bande transversale 6 sur laquelle est rapportée la lame rigide 3 déjà mentionnée qui peut être par exemple en métal. La matière utilisée est telle que les lignes d'articulation 5,et les autres lignes d'articulation prévues dans le panneau 4 puissent être réalisées simplement par des lignes de compression,ou de rainurage,formées lors de la découpe de ce panneau. Dans ces conditions cette matière peut être avantageusement du polypropylène, car cette matière est susceptible de se plier sans risque de détérioration à l'endroit de telles lignes d'articulation.

Le panneau 4 utilisé peut avoir avantageusement une épaisseur d'environ 0,8 mm et sa matière constitutive être d'une densité de 0,9. Les dimensions du panneau peuvent être par exemple de 80 X 120 mm. Ceci permet d'obtenir un ensemble qui est particulièrement léger (environ moins de 700 Gr) et facile à porter après repliement des deux volets 1 et 2 l'un contre l'autre.

Cependant, les indications numériques fournies ci-dessus sont données à simple titre indicatif. En effet les dimensions du panneau pourraient être éventuellement plus grandes. De même l'épaisseur pourrait être différente, par exemple comprise entre 0,5 et 1,5 mm et la densité de la matière plastique pourrait elle-même être différente. L'une des faces du présent panneau porte un revêtement de couleur blanche. Quant à l'autre face, elle comporte un revêtement métallique présentant avantageusement une surface grainée pour éviter des points chauds de réflexion de la lumière.

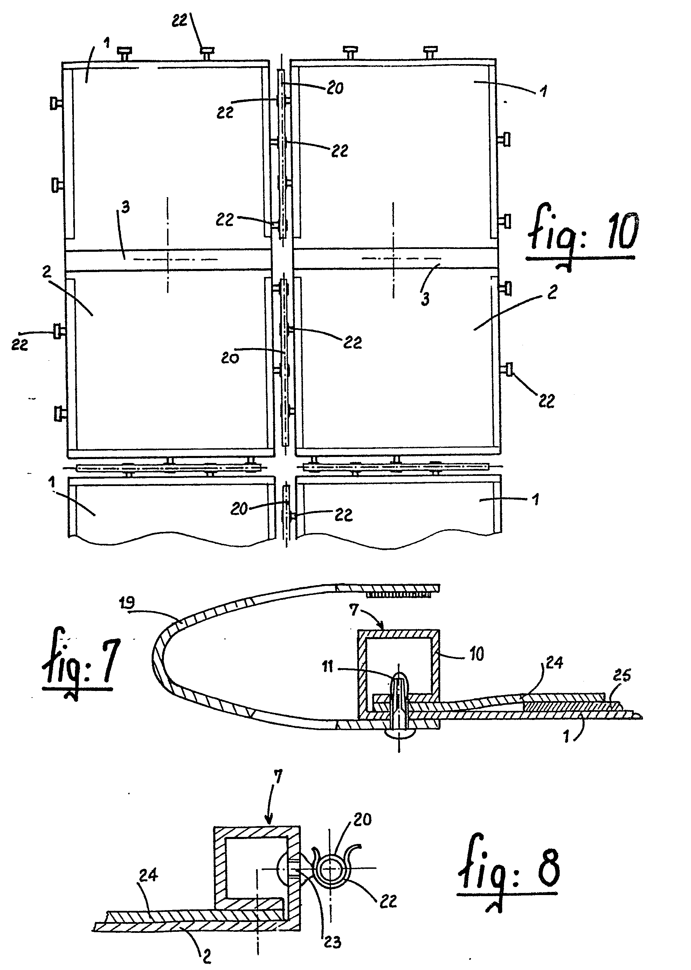

Compte tenu de la flexibilité du présent panneau, les deux volets 1 et 2, constitués par celui-ci, comportent des rebords de raidissement 7. Chacun de ceux-ci est constitué par une extension 8 prévue sur la partie correspondante des différents côtés du panneau 4 et dans laquelle il est prévu une succession de lignes 9 d'articulation s'étendant parallèlement aux bords respectifs de ce panneau. Ces lignes, qui sont réalisées par compression ou rainurage lors de la découpe du panneau, délimitent autant de bandes parallèles 10 qui sont repliées à angle droit les unes par rapport aux autres pour constituer chacun des rebords 7 de raidissement, comme cela est plus particulièrement visible sur les figures 7 et 8. Ces différentes bandes sont maintenues dans leur position définitive par des organes appropriés de jonction, par exemple des boutons-pression ou des rivets élastiques 11 en matière plastique, engagés à travers des trous 12 prévus sur certaines de ces bandes. Cependant au lieu d'être réalisés par pliage les rebords 7 de raidissement pourraient être formés par roulage des bords correspondants en prévoyant une série de rainures parallèles aptes à faciliter un tel roulage.

Dans l'un et l'autre cas le prix de revient du présent dispositif est particulièrement faible puisque les deux volets 1 et 2 de celui-ci sont constitués par un seul panneau qui forme également les rebords de de raidissement de ces volets.Par ailleurs la réalisation de ces rebords est très facile à exécuter puisqu'il suffit de replier les différentes bandes 10 des extensions 8 et de les assembler au moyen des rivets élastiques 11.

La lame métallique 3 est fixée sur la bande transversale 6 du panneau 4 au moyen d'un certain nombre de rivets métalliou de tous autres moyens appropriés. Cette lame et cette bande présentent, en leur milieu, un trou 13 pour permettre la fixation de l'ensemble sur le support prévu pour celui-ci. Ce support consiste en un tube métallique déformable 14 dont une extrémité porte une tige filetée 15 destinée à être engagée à l'intérieur du trou 13 et être fixée en place au moyen d'un écrou 16. Quant à l'extrémité opposée de ce tube déformable,elle porte un embout 17 susceptible d'être vissé sur l'extrémité supérieure d'un pied pliant 18 de soutien,du type des pieds utilisés pour supporter des appareils photographiques ou similaires. Cependant le tube déformable 14pourrait être remplacé par tout autre élément librement orier

Grâce aux deux lignes d'articulation 5, prévues de part et d'autre de la lame rigide 3, les volets 1 et 2 peuvent être placés dans une infinité de positions angulaires différentes par rapport à cette lame. Ceci permet notamment de les replier parallèlement l'un contre l'autre, dans la position représentée à la figure 3 pour transporter aisément le présent dispositif. A cet effet l'un des deux volets de celui-ci, en l'occurrence le volet 1, porte à son extrémité une poignée de préhension constituée par une patte flexible 19. Pour assurer le maintien des deux volets l'un contre l'autre, l'extrémité opposée de la poignée 19 est capable d'être fixée sur l'extrémité du volet 2. A cet effet elle peut comporter une bande en tissu adhésif, du type connu sous la marque "VELCRO",et qui est susceptible d'être fixée par simple contact contre une bande complémentaire de ce tissu.

Lorsque le présent dispositif est monté sur le support amovible de celui-ci, comme représenté à la figure 5, ses deux volets 1 et 2 peuvent être disposés sous forme d'un dièdre plus ou moins ouvert, par exemple pour concentrer la lumière sur une zone plus ou moins étendue. Or les deux volets de ce dispositif peuvent être immobilisés dans leur position angulaire respective au moyen des tiges de liaison 20 et 21 disposées de façon à relier le bord latéral de l'un de ces volets au bord correspondant de l'autre, de telles tiges de liaison étant de préférence disposées sur chaque côté.

Ces tiges de liaison sont fixées sur des organes de fixation prévus sur les bords latéraux des deux volets. Dans l'exemple représenté, ces organes de fixation consistent en des pinces élastiques 22 en matière plastique portées par des axes 23 montés librement rotatifs dans les parois latérales des rebords de raidissement 7 (voir figure 8). Ainsi ces pinces peuvent être disposées dans n'importe quelle orientation angulaire voulue.

Les dimensions de ces pinces sont telles que les tiges de liaison 20 et 21 doivent être engagées à force dans celles-ci, après quoi elles se trouvent immobilisées par serrage élastique à l'intérieur de ces pinces. Dans ces conditions les volets 1 et 2 du présent dispositif se trouvent ainsi parfaitement immobilisés dans les positions angulaires voulues. Cependant il est possible de régler très facilement l'angle d'ouverture de ces volets en les manoeuvrant à la main, ce qui provoque alors le coulissement à force des tiges de liaison 20 et 21 dans les pinces correspondantes 22.

Dans l'exemple représenté à la figure 5, la lame rigide 3, qui correspond en quelque sorte à l'arête du dièdre formé, se trouve disposée dans un plan vertical. Cependant il est bien évident que son orientation pourrait être différente, par exemple horizontale, ou inclinée. A cet effet il suffit de bloquer le dispositif dans la position voulue par simple serrage de l'écrou 16. Par ailleurs, dans l'exemple illustré à la figure 5 ce sont les faces réfléchissantes 1b et 2b qui sont orientées vers le sujet à éclairer. Cependant les deux volets pourraient être complètement retournés pour orienter leurs faces opposées 1a et 2a vers ce sujet.

A cet effet il suffit de démonter la lame rigide 3 et de la fixer en sens inverse sur l'extrémité supérieure du bras déformable 14 du support de l'ensemble.

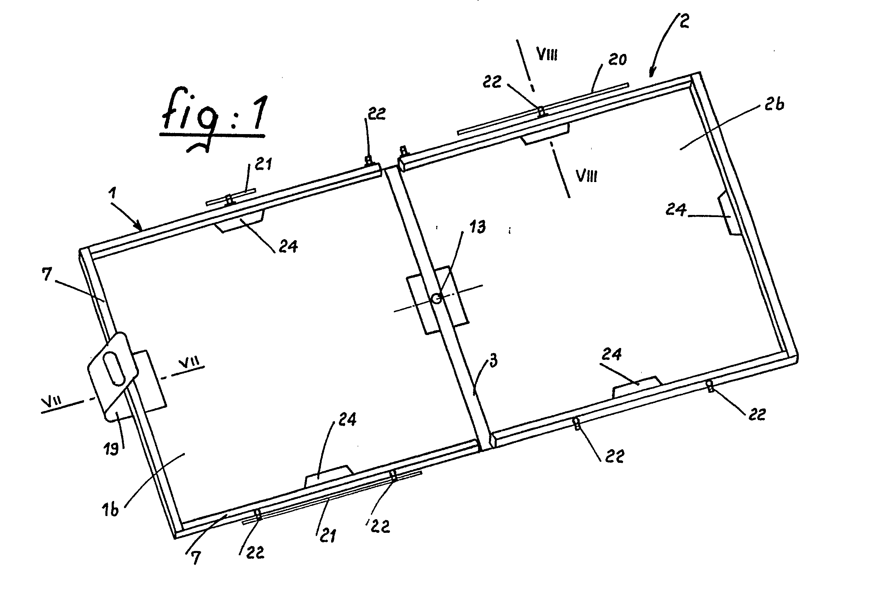

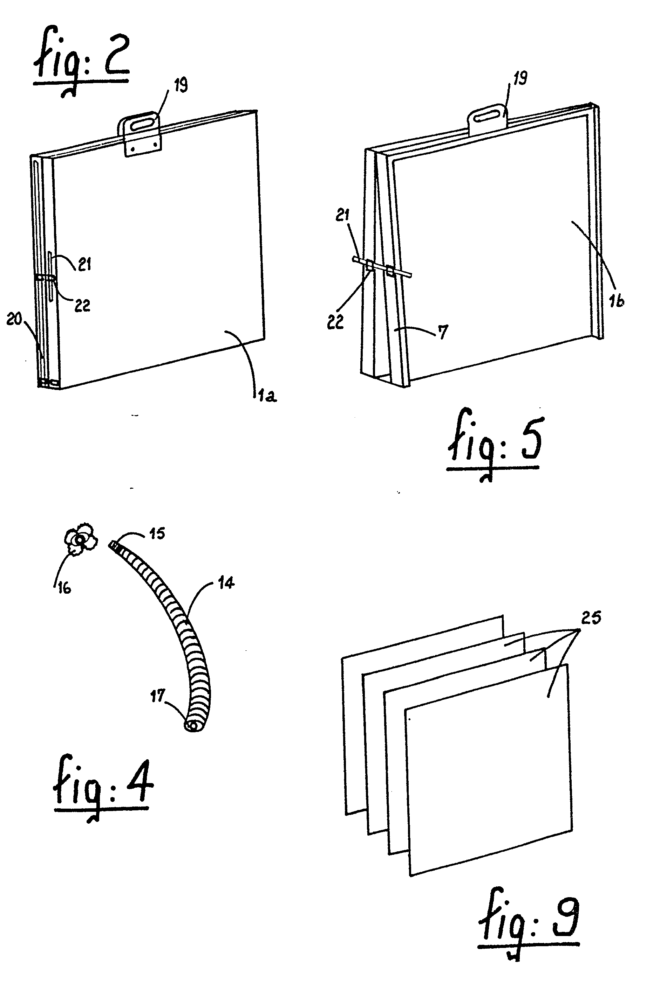

Cependant les deux volets 1 et 2 peuvent être également disposés dans un même plan pour constituer un panneau réfléchissant de plus grande surface susceptible d'être disposé sur le sol ou d'être adossé contre un support. Dans un tel cas les tiges de liaison 20 et 21 peuvent être également employées pour maintenir les deux volets dans un même plan. A cet effet , une telle tige est disposée sur chaque côté du panneau constitué et est engagée simultanément à l'intérieur des pinces élastiques 22 portées par les bords correspondants des deux panneaux 1 et 2 (voir figure 1). Du côté de leurs faces réfléchissantes 1b et 2b, les deux volets du présent dispositif comportent, sur leurs bords, des pattes 24 aptes à maintenir en place un élément amovible 25, par exemple un filtre, un élément diffuseur, une surface absorbante, ou tout autre type d'élément susceptible de modifier les caractéristiques de la lumière réfléchie.Les pattes 24 ainsi prévues sont fixées en place lors de la réalisation des rebords de raidissement 7 (comme représenté sur les figures 7 et 8).

Pour mettre en place un élément accessoire 25, il suffit alors d'engager celui-ci sous les différents pattes 24 prévues, comme représenté à la figure 7. Le présent dispositif peut avantageusement comporter une série d'éléments accessoires 25 de caractéristiques différentes, par exemple des écrans de diverses couleurs, des écrans translucides de diffusion, des écrans noirs ou gris pour l'absorption de la lumière, ou bien encore des filtres de lumière (voir figure 8). Lors du transport du présent dispositif, ces éléments peuvent alors être disposés les uns contre les autres dans l'espace réservé entre les deux volets 1 et 2.

Dans le cas où il suffit de disposer un réflecteur de faible surface, il est possible d'utiliser l'une et l'autre faces d'un seul des volets 1 et 2 du présent dispositif. Dans un tel cas celui-ci peut être employé sous sa forme repliée représentée à la figure 3. Cependant il peut également être employé sous une forme inverse de repliage, comme représenté à la figure 6 ,pour pouvoir utiliser la face réfléchissante 1b ou 2b de l'un ou l'autre panneau.

A ce sujet il convient de noter que les rebords d'encadrement 7 assurent une certaine protection des surfaces réfléchissantes 1b et 2b à revêtement métallique qui sont relativement fragiles. C'est du reste pour cette raison que l'agencement est conçu de manière que ces faces se trouvent disposées à l'intérieur lors du repliage de l'ensemble dans sa position de transport. Lors du transport les tiges de liaison 20 et 21, qui sont d'inégale longueur, sont fixées en place à l'intérieur des pinces latérales 22. Dans ces conditions elles ne risquent pas d'être perdues.

Cependant ces tiges de liaison et les pinces 22 ont également pour fonction de permettre l'assemblage côte à côte de plusieurs dispositifs selon l'invention, comme représenté à la figure 10. A cet effet les pinces 22, prévues sur l'un des côtés de chacun des volets 1 et 2 ,sont décalées dans le sens de la longueur par rapport aux pinces 22 existant sur le côté opposé. Dans ces conditions il est possible de disposer deux dispositifs selon l'invention à plat l'un contre l'autre en plaçant les pinces élastiques 22 de leurs côtés adjacents dans le même alignement X-Y. Ensuite il suffit de disposer une tige de liaison 20 dans les pinces 22 ainsi alignées. En effet ceci assure alors automatiquement la liaison des deux dispositifs placés côte à côte.

Dans le but de permettre également la jonction de deux dispositifs l'un à la suite de l'autre, des pinces élastiques 22 peuvent aussi être prévues sur des bords extrêmes des panneaux 1 et 2 ,comme représenté sur la figure 10. Dans un tel cas il suffit de procéder à la même opération que précédemment pour assembler deux panneaux réfléchissants l'un à la suite de l'autre.

Ceci permet de réaliser des panneaux réfléchissants de très grande surface et ce ,à partir de dispositifs individuels de faible encombrement et qui peuvent être transportés aisément. Dans le cas de l'assemblage de plusieurs dispositifs les uns à la suite des autres, ceux-ci peuvent être disposés dans des orientations différentes par articulation de leurs bords. On peut donc les articuler les uns aux autres à la façon des panneaux d'un paravent, les tiges de liaison 20 et 21 constituant des axes de charnière.

La forme de réalisation du présent dispositif, à partir d'un panneau 4 d'un seul tenant, est particulièrement avantageuse, notamment en ce qui concerne la réduction du prix de revient. Cependant le dispositif selon l'invention n'est en aucune façon limité à cette seule forme de réalisation. En effet les deux volets de ce dispositif pourraient être constitués par des éléments distincts s'articulant sur un élément rigide transversal. Par ailleurs ces volets pourraient être dépourvus de rebords de raidissement dans le cas où ils seraient constitués par un matériau suffisamment rigide.

Quant aux moyens d'immobilisation des deux volets dans la position voulue, ils pourraient être réalisés différemment. Ainsi la figure 11 représente une variante dans laquelle il est prévu une seule tige 20a de liaison dont les extrémités sont engagées dans des pinces élastiques 22a portées par les bords de l'un et l'autre volets. En son milieu cette tige porte un téton 26 monté coulissant dans une fente 27 ménagée dans une patte 3a formée par une extension coudée de l'extrémité correspondante de la lame métallique 3 prévue selon l'axe transversal du panneau.

Du fait de sa conception le dispositif selon l'invention présente les avantages suivants :

1) Grâce à la réversibilité de ses deux volets, ce dispositif est susceptible d'être utilisé pour réfléchir la lumière de deux façons différentes, à savoir d'une manière diffuse ou par réflexion sur une surface à forte réflectance.

2) La forme de ce dispositif peut être modifiée en disposant ses deux volets dans des positions angulaires différentes afin de diriger la lumière réfléchie sur une zone de surface plus ou moins grande.

3) Ce dispositif peut être orienté en tout sens à la fois par rotation de celui-ci par rapport au bras 14 de support et par déformation de ce bras lui-même.

4) Le présent dispositif peut également être utilisé sans son support, en étant placé debout sur le sol ou adossé à un élément quelconque d'appui.

5) Pour éclairer des zones de surface limitée, ce dispositif peut être utilisé sous sa forme repliée. Mais de façon inverse, il est possible d'assembler côte à côte plusieurs dispositifs selon l'invention de manière à réaliser un panneau réfléchissant de grande surface.

6) Il est possible de modifier les caractéristiques de la lumière réfléchie en ajoutant des écrans colorés ou de filtration ou tous autres filtres accessoires voulus.

7) Ce dispositif est aisément transportable et il ne risque pas d'être détérioré au cours des opérations de transport. Par ailleurs, son adaptation à toute forme possible d'utilisation est très facile à réaliser.

8) Comme déjà indiqué, le prix de revient du présent dispositif a l'avantage d'être peu élevé et ce, tout particulièrement dans le cas de la forme de réalisation représentée sur les dessins annexés et dans laquelle les deux volets de réflexion sont constitués par un panneau d'un seul tenant.

REVENDICATIONS

1 - Dispositif réflecteur de lumière susceptible d'être transporté à la main pour être utilisé notamment lors des prises de vues photographiques ou cinématographiques, et comportant au moins un panneau réflecteur , caractérisé en ce qu'il est constitué par deux volets réversibles (1 et 2) dont les deux faces sont aptes à réfléchir la lumière de façon différente, par exemple de manière diffuse sur une face alors que l'autre est à forte réflectance, et qui sont articulés de part et d'autre d'une lame rigide (3) susceptible d'être fixée sur le support amovible de ce dispositif, de façon à pouvoir être déployés, selon des angles différents d'ouverture dans un sens ou dans l'autre, pour utiliser une de leur face ou l'autre, ou à être repliés l'un contre l'autre pour le transport de l'ensemble, ou pour réduire sa taille, et en ce que les bords latéraux de ces volets sont pourvus d'organes de fixation aptes à immobiliser, dans des positions variables, des tiges amovibles (20,21) ou similaires disposées de façon à relier les bords correspondants de ces deux volets pour les immobiliser selon l'angle d'ouverture voulu, ou pour les maintenir dans le prolongement l'un de l'autre dans un même plan afin de constituer un panneau de grande surface.

2 - Dispositif réflecteur selon la revendication 1, caractérisé en ce que les deux volets (1 et 2) de celui-ci sont constitués par un panneau (4) d'un seul tenant en matière plastique relativement mince présentant deux rainures ( 5 ) susceptibles de former des lignes d'articulation de part et d'autre d'une bande transversale sur laquelle est rapportée la lame rigide (3) susceptible d'être fixée sur le support amovible ( 14 ) de l'ensemble, les bords des deux volets ( 1 et 2 ) ainsi réalisés portant des rebords de raidissement (7).

3 - Dispositif réflecteur selon la revendication 2, caractérisé en ce que les rebords de raidissement(7)des deux volets ( 1et2 ) sont constitués par roulage ou repliage des bords correspondants du panneau (4) sous forme de barrettes creuses ,une succession de lignes d'articulation (9) étant prévues parallèlement à chacun de ces bords pour permettre le roulage de ceux-ci.ou pour délimiter autant de bandes parallèles ( 10 ) pliées à angle droit les unes par rapport aux autres et maintenues en place par des organes de jonction, tels que des rivets élastiques.

4 - Dispositif réflecteur selon l'une des revendications précédentes, caractérisé en ce que les organes de fixation, prévus sur les bords latéraux des deux volets ( 1 et2 ) pour recevoir des tiges (20 et 21) de liaison ou similaires, consistent en des petites pinces élastiques (22) montées rotatives sur elles-mêmes de façon à pouvoir être orientes dans une direction quelconque.

5 - Dispositif réflecteur selon l'une des revendications précédentes, caractérisé en ce que les organes de fixation, prévus sur les bords latéraux des deux volets ( 1 et 2 ) pour recevoir des tiges (20 et 21) de liaison ou similaires, sont décalés, dans le sens longitudinal, entre un bord déterminé de chacun de ces volets et le bord opposé de ceux-ci, de façon à permettre l'assemblage, bord à bord, des volets de deux dispositifs identiques en plaçant les organes de fixation correspondants sur un même alignement et en les réunissant avec une même tige de liaison (20 ou 21).

6 - Dispositif réflecteur selon la revendication 5, caractérisé en ce qu'en plus des organes décalés de fixation prévus sur les bords latéraux des deux volets (1 et 2), il existe d'autres organes similaires de fixation sur les bords extrêmes de ceux-ci, ces organes de fixation étant également décalés d'une extrémité à l'autre pour permettre l'assemblage de deux dispositifs identiques l'un à la suite de l'autre.

7 - Dispositif réflecteur selon l'une des revendications précédentes, caractérisé en ce que sur certains des bords des volets, il est prévu des pattes (24) de retenue permettant de maintenir en place un écran amovible ( 25 ) devant l'une des faces de ces volets.

8 - Dispositif réflecteur selon l'une des revendications précédentes, caractérisé en ce que le support amovible de l'ensemble consiste en un tube déformable (14) ou tout autre élément orientable, dont une extrémité est destinée à être fixée sur la lame rigide (3) disposée transversalement entre les deux volets (1 et 2).

9 - Dispositif réflecteur selon l'une des revendications précédentes, caractérisé en ce que l'extrémité de l'un des volets porte une poignée de préhension (19) apte à être fixée sur l'extrémité de l'autre volet après repliement de ces deux volets l'un contre l'autre, pour permettre le transport aisé de l'ensemble.

fig:1

*fig: 2*

*fig: 5*

*fig: 4*

*fig: 9*

_fig: 3_

_fig: 11_

fig: 6

fig: 10

fig: 7

fig: 8